# EUROPEAN PATENT SPECIFICATION

(11) **EP 3 651 124 B1**
(45) Date of publication and mention of the grant of the patent: **29.04.2026**
(21) Application number: 18205626.7
(22) Date of filing: 12.11.2018
(51) Int. Cl.: G07C 9/00, B62H 5/00, E05B 71/00, B60R 25/25

(54) **LOCKING SYSTEM FOR BICYCLE**
VERRIEGELUNGSSYSTEM FÜR FAHRRÄDER
SYSTÈME DE VERROUILLAGE POUR BICYCLETTE

(43) Date of publication of application: 13.05.2020
(73) Proprietor: Tri Star Inc., 226399 Nantong, Jiangsu (CN)
(72) Inventor: LIU, Jiayan Johnny, 200120 SHANGHAI (CN); LI, Feifie, 2263000 NANTONG, JIANGSU (CN); LI, Yongqian, 226300 NANTONG, JIANGSU (CN)
(74) Representative: Walther Bayer Faber Patentanwälte PartGmbB

(56) References cited:
- WO-A1-2018/095436
- CN-A- 107 264 678
- US-A1- 2015 020 558

## Description

The present invention relates to a cycle having a smart lock system for identification and authorization of a user.

The process of industrialization has contributed to social progress and economic development, but is also a cause of pollution and environmental damage. While mobility and traffic are essential to an industrialized society, exhaust emissions from cars are a significant source of urban air pollution. One approach to reduce emissions lies in the reduction of traffic by promoting public transportation. Cycles and in particular shared bicycles are an efficient, inexpensive and convenient means to cover short distances between a public transportation station and a final destination. Cycles can thus contribute significantly to the reduction of emissions.

The time period a cycle is used for actual commuting is relatively short. It is therefore particularly convenient and efficient to share cycles between users in a sharing system to achieve a high utilization rate. Cycles need to be locked to avoid theft and unauthorized use. At the same time many users need to have easy access to the cycle.

Typically, cycles are locked with either an ordinary mechanical lock, a combination lock or a smart lock. Ordinary mechanical locks are unlocked with a key. A disadvantage of these mechanical locks is, that keys must be carried along and can be forgotten or lost. Furthermore, mechanical locks can be opened without a key relatively easily. For opening a combination lock a fixed number code needs to be entered and the number code needs to be altered to keep the combination lock closed. A disadvantage with combination locks is, that the number combination can be forgotten. Smart password locks often rely on a scanning operation, a dynamic code password and a mobile device to unlock the smart lock. This bears the risk of being unable to open the lock if the mobile device has a malfunction or if a network signal for the mobile device is insufficient. Also, if a network traffic is high, it can take 10 seconds and longer to unlock the smart password lock.

Cycles in this context can be understood as two wheeled vehicles, in particular bicycles but also motorbikes, scooters or other vehicles, such as small electric vehicles.

WO 2018/095436A1 discloses a security system with a device and a lock and to secure the device. A control component may actuate the lock to lock or unlock. The device to be secured may be a bicycle in a bicycle sharing system. The security system also comprises a fingerprint reader for collecting a fingerprint of a requestor and a processing device for comparing the fingerprint with the reference fingerprint and determine whether the fingerprint is consistent with the reference fingerprint. According to a result of the determination that the fingerprint is consistent with the reference fingerprint, the processing device may determine that the requestor has permission to use the bicycle recognizing fingerprint. After determining that the requestor has permission to use the bicycle, the processing device may generate an unlocking instruction and transmit the unlocking instruction to the control component. According to the disclosure the device may include a power supply such as a battery. However, processing the fingerprint requires a big amount of data making the security system less reliable and slow.

It is an object of the present invention to provide a cycle having a smart lock system, for the identification and authorization of a user, with a high reliability and short response time.

This object is achieved by a cycle as taught by claim 1 of the present invention, and by independent claims 8 and 9.

Advantageous embodiments of the inventive system are defined in the subclaims.

To enable the charging of usage fees, the smart lock system according to the present invention comprises an integrated timer for recording a usage time period of a user.

As a preferred embodiment, the fingerprint sample data is encrypted and stored in the database to avoid fraudulent use of the fingerprint sample data.

According to another preferred embodiment, the smart lock system further comprises of a positioning system, in particular a GPS system, for locating a cycle quickly and efficiently by a user.

To ensure location independent and longtime availability of the cycle, at least two power sources are arranged in or connected to a power supply system. And the power sources are advantageously accessed in a cascading order and the power source comprises of at least one out of a solar cell, an internal power supply, a battery and an external power supply.

According to another preferred embodiment, the power source is connected to supply energy to a motor and/or the identification system for storing fingerprint sample data and/or matching fingerprint sample data and/or recording usage by a user.

Independent method claim 8 defines a registration of user data for a smart lock system for identification and authorization of a user of a cycle according to independent claim 1, wherein a registration of user data is performed with a mobile device or a fixed device and the user data is matched with fingerprint sample data. Thus, a particularly secure and reliable use of the cycle is possible.

Fingerprint sample data for the matching with the user data is retrieved from the recognition system so that unlocking of the cycle is triggered at the cycle and independent of a fixed docking stations or a registration station.

The present invention also is embodied in the fingerprint feature information being extracted from the fingerprint sample data by an extraction algorithm. This allows data protection and reduction in storage capacity of the database.

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

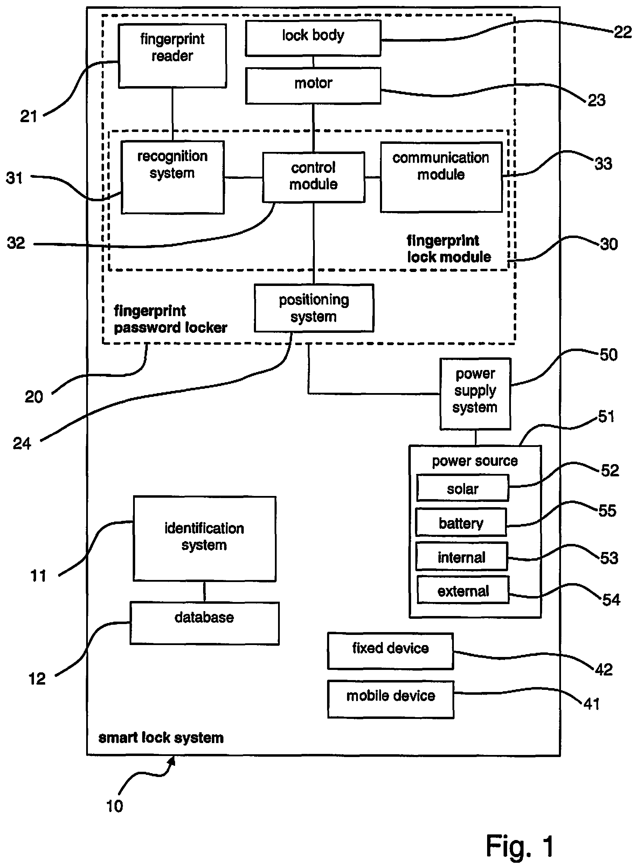

Additional details, characteristics and advantages of the object of the invention are disclosed in the subclaims and the following description of the figure - which in an exemplary fashion - shows preferred embodiments of the smart lock system according to the invention. In the drawing Fig. 1 shows a smart lock system of a cycle according to the invention.

In Fig. 1 depicted is a smart lock system 10 of a cycle comprising of an identification system 11 and a database 12. The smart lock system 10 further comprises of a fingerprint password locker 20 with a fingerprint reader 21, a lock body 22, a motor 23 and further comprises a fingerprint lock module 30. The fingerprint lock module 30 comprises a recognition system 31, a control module 32 and a communication module 33.

During the initial registration process of a user, a mobile device 41 or a fixed device 42 is used to upload personal data to the identification system 11 and the database 12. Also, during that initial registration fingerprint sample data is obtained from placing a finger on the fingerprint reader 21, taking an image of the fingerprint and extracting fingerprint sample data from the image with the recognition system 31. The fingerprint sample data is sent to the identification system 11 and the database 12 via the communication module 33. The personal data and the fingerprint sample data of the user is matched in the identification system 11 and stored in the database 12 to establish a complete user profile and to finalize the registration process. The fingerprint sample data of respective users is encrypted and stored in the database 12 to avoid fraudulent use of the fingerprint sample data.

Human fingerprints are an impression from friction ridges of a finger. A unique pattern of a fingerprint comprises of a combination of beginning, end line and bifurcation. Fingerprints are unique to a person and durable over the lifetime of a person. Therefore, fingerprints are suitable as longterm marker of a person or user identity. A fingerprint is particularly convenient to use for unlocking a lock as a finger cannot be forgotten or lost.

A positioning system 25 disposed in the fingerprint password locker 20 of the cycle is connected to the control module 32 and the communication module 33. A user can retrieve the position of the cycle with the mobile device 41 by wireless communication with the communication module 33. In particular the position information of several cycle's positioning systems 25 is retrieved through the communication module 33 which is connected with the positioning system 25 in order to find several cycles which are in the vicinity of the user. The position of the cycles is displayed in a web-based app. When the user identifies a cycle in his vicinity and chooses to use that cycle, he can reserve or book the cycle with the web-based app.

To unlock the bike the user positions his finger on the fingerprint reader 21 on the cycle. The fingerprint reader 21 takes an image of the user's fingerprint and the fingerprint sample data is extracted from the image by the recognition system 31. The fingerprint sample data is forwarded through the control module 32 to the communication module 33 and send to the identification system 11. The identification system 11 then applies an extraction algorithm to match the user's fingerprint sample data with fingerprint sample data stored in the database 12 to identify the user. Once a positive match is found and the user is identified an unlock signal is sent from the identification system 11 to the communication module 33. The unlock signal is forwarded to the control module 32 and a motor 23 is triggered to mechanically release the lock body 22 of the cycle. The user can now use the unlocked cycle. Simultaneously to the unlocking of the cycle and the submission of the unlock signal a timer for recording usage time and determining a usage fee is started. After usage the user locks the cycle by locking the lock body 22 and thus makes the cycle available to other users. The timer and recording of usage time are stopped with locking the cycle. In particular the locking of the lock body 22 is identified by the control module 32 and a lock signal which is submitted to the identification system 11 stops the timer. Information about the usage time from the timer is used to determine the fee for the use of the cycle and the fee is directly deducted from the user's account. The user's account information and bank details are part of the personal data the user uploads during the registration process.

A power supply system 50 is connected to the fingerprint password locker 20 to supply and manage the supply of electric energy to the positioning system 25, the control module 32, the communication module 33, the recognition system 31, the fingerprint reader 21, the motor 23 and the lock body 22. A power source 51 with a solar cell 52, an internal power source 53, an external power source 54 and with a battery 55 is connected to the power supply system 50. The solar cell 52, the battery 55 and the power supply system 50 are disposed on the cycle to allow full functionality of the components of the fingerprint password locker 20 even if not connected to a docking station with a grid connection. If the cycle is not connected to the external power source 54, in particular a power grid, the power supply system 50 primarily draws power from the solar cell 52 to supply energy to the fingerprint password locker 20. The battery 55 is charged with power from the solar cell 52 in case not all power is needed by the fingerprint password locker 20. At nighttime or during periods of low solar radiation power for the fingerprint password locker 20 is drawn from the battery 55. If the cycle is located in a docking station and connected to the external power supply 54 the battery 55 is charged and power to the fingerprint password locker 20 is supplied from the external power source 54. Thus, a cascading power supply system 50 is realized in which power supply from the external power source 54 is prioritized over the power supply from the solar cell 52 which in turn is prioritized over power supply from the battery 55.

The power supply system 50 manages power supply such that the fingerprint password locker 20 stays operational over a period of several month without the need for the external power supply 54. This is of advantage as investment costs for docking stations for cycles are almost excluded.

Particularly the power supply system 50 in combination with the wireless functionality of the communication module 33 and the positioning system 25 allows a very flexible and reliable use of cycles in a shared pool with other users.

## Claims

1. Cycle having a smart lock system (10) for identification and authorization of a user, said smart lock system (10) comprises
- a fingerprint reader (21) for recording a fingerprint of a user,
- a recognition system (31) for recognizing fingerprint sample data,
- a lock body (22) for locking the cycle,
- a motor (23) for mechanically releasing the lock body (22),
- a control module (32) for controlling the lock body,
- an identification system (11) for identification of a user from fingerprint sample data,
- a communication module (33) for exchanging data with the identification system (11),
- a power source (51) for supplying the smart lock system with (11) electric energy,
wherein the identification system (11) is configured to send an unlock signal to the communication module (33) once a positive match is found and the user is identified, wherein the unlock signal is forwarded to the control module (32) and the motor (23) is triggered by the unlock signal for mechanically releasing the lock body (22), and wherein Z the smart lock system comprises an integrated timer for recording usage period of a user, the timer being started simultaneously to the unlocking of the cycle.

2. Cycle having a smart lock system (10) according to claim 1,
**characterized in that,**
the fingerprint sample data is encrypted and stored in a database (12).

3. Cycle having a smart lock system (10) according to one of the previous claims, further comprising of a positioning system (25), in particular a GPS system, for locating the cycle.

4. Cycle having a smart lock system (10) according to one of the previous claims, **characterized in that,**
the power source (51) comprises of at least one out of a solar cell (52), an internal power supply (53), a battery (55) and an external power supply (54).

5. Cycle having a smart lock system according to one of the previous claims, **characterized in that,**
at least two power sources are arranged in a power supply system (50).

6. Cycle having a smart lock system according to claim 5,
**characterized in that,**
the power sources (51) are accessed in a cascading order.

7. Cycle having a smart lock system according to one of the previous claims, **characterized in that,**
the power source (51) is connected to supply energy to the motor (23) and/or the identification system (11) for storing fingerprint sample data and/or matching fingerprint sample data and/or recording usage by a user.

8. Registration of user data for a smart lock system (10) for identification and authorization of a user of a cycle according to one of the preceding claims, comprising the steps of:
- Performing a registration of user data with a mobile device (41) or a fixed device (42),
- Retrieving, from the recognition system (31),
the fingerprint sample data for matching with the user data,
- Matching the user data with fingerprint sample data by the identification system (11), wherein
- Fingerprint feature information is extracted from the fingerprint sample data by an extraction algorithm by the identification system (11).

9. Unlocking of a cycle according to one of the claims 1 to 7, comprising the steps of:
- Recording a fingerprint of a user by the fingerprint reader (21),
- Recognizing the fingerprint sample data by the recognition system (31),
- Sending an unlock signal by the identification system (11) to the communication module (33) once a positive match is found and the user is identified, the unlock signal being forwarded to the control module (32) and the motor (23) being triggered by the unlock signal for mechanically releasing the lock body (22),
- Starting the timer simultaneously to the unlocking of the cycle.

## Patentansprüche

1. Fahrrad mit einem intelligenten Schließsystem (10) zur Identifizierung und Autorisierung eines Benutzers, wobei das intelligente Schließsystem (10) umfasst
- einen Fingerabdruckleser (21) zum Erfassen eines Fingerabdrucks eines Benutzers,
- ein Erkennungssystem (31) zum Erkennen von Fingerabdruck-Musterdaten,
- einen Verriegelungskörper (22) zum Verriegeln des Fahrrads,
- einen Motor (23) zum mechanischen Entriegeln des Verriegelungskörpers (22),
- ein Steuermodul (32) zum Steuern des Verriegelungskörpers (22),
- ein Identifizierungssystem (11) zum Identifizieren eines Benutzers anhand von Fingerabdruck-Musterdaten,
- ein Kommunikationsmodul (33) zum Austausch von Daten mit dem Identifizierungssystem (11),
- eine Stromquelle (51) zum Versorgen des intelligenten Schließsystems (10) mit elektrischer Energie,
wobei das Identifizierungssystem (11) so konfiguriert ist, dass es ein Entriegelungssignal an das Kommunikationsmodul (33) sendet, sobald eine positive Übereinstimmung gefunden und der Benutzer identifiziert wurde, wobei das Entriegelungssignal an das Steuermodul (32) weitergeleitet wird und der Motor (23) mit dem Entriegelungssignal ausgelöst wird, um den Verriegelungskörper (22) mechanisch zu entriegeln, und wobei das Smart-Lock-System einen integrierten Zeitnehmer zum Aufzeichnen der Nutzungsdauer eines Benutzers umfasst, wobei der Zeitnehmer gleichzeitig mit der Entriegelung des Fahrrads gestartet wird.

2. Fahrrad mit einem intelligenten Schließsystem (10) gemäß Anspruch 1,
**dadurch gekennzeichnet, dass**
die Fingerabdruck-Musterdaten verschlüsselt und in einer Datenbank (12) gespeichert werden.

3. Fahrrad mit einem intelligenten Schließsystem (10) gemäß einem der vorherigen Ansprüche,
welches ferner ein Ortungssystem (25), insbesondere ein GPS-System, zum Orten des Fahrrads umfasst.

4. Fahrrad mit einem intelligenten Schließsystem (10) gemäß einem der vorherigen Ansprüche,
**dadurch gekennzeichnet, dass**
die Stromquelle (51) mindestens eines der folgenden Elemente umfasst: eine Solarzelle (52), eine interne Stromversorgung (53), eine Batterie (55) und eine externe Stromversorgung (54).

5. Fahrrad mit einem intelligenten Schließsystem gemäß einem der vorherigen Ansprüche,
**dadurch gekennzeichnet, dass**
mindestens zwei Stromquellen (51) in einem Stromversorgungssystem (50) angeordnet sind.

6. Fahrrad mit einem intelligenten Schließsystem gemäß Anspruch 5,
**dadurch gekennzeichnet, dass**
die Stromquellen (51) in einer kaskadierenden Reihenfolge angesprochen werden.

7. Zyklus mit einem intelligenten Schließsystem gemäß einem der vorherigen Ansprüche, **dadurch gekennzeichnet, dass**
die Stromquelle (51) angeschlossen ist, um den Motor (23) und/oder das Identifizierungssystem (11) mit Energie zu versorgen, um Fingerabdruck-Musterdaten zu speichern und/oder Fingerabdruck-Musterdaten abzugleichen und/oder die Nutzung durch einen Benutzer aufzuzeichnen.

8. Registrierung von Benutzerdaten für ein intelligentes Schließsystem (10) zur Identifizierung und Autorisierung eines Benutzers eines Fahrrads gemäß einem der vorstehenden Ansprüche, mit den folgenden Schritten:
- Durchführen einer Registrierung von Benutzerdaten mit einem mobilen Gerät (41) oder einem fest installierten Gerät (42),
- Abrufen der Fingerabdruck-Musterdaten aus dem Erkennungssystem (31) zum Abgleich der Benutzerdaten,
- Abgleichen der Benutzerdaten mit den Fingerabdruck-Musterdaten mit dem Identifizierungssystem (11), wobei
- Fingerabdruckmerkmalsinformationen aus den Fingerabdruck-Musterdaten mit einem Extraktionsalgorithmus durch das Identifizierungssystem (11) extrahiert werden.

9. Entsperren eines Fahrrads gemäß einem der Ansprüche 1 bis 7, umfassend die folgenden Schritte:
- Aufzeichnen eines Fingerabdrucks eines Benutzers mit dem Fingerabdruckleser (21),
- Erkennen der Fingerabdruck-Musterdaten mit dem Erkennungssystem (31),
- Senden eines Entsperrsignals vom Identifizierungssystem (11) an das Kommunikationsmodul (33), sobald eine positive Übereinstimmung gefunden und der Benutzer identifiziert wurde, wobei das Entsperrsignal an das Steuermodul (32) weitergeleitet wird und der Motor (23) durch das Entsperrsignal ausgelöst wird, um den Verriegelungskörper (22) mechanisch zu entriegeln,
- Gleichzeitiges Starten des Zeitnehmers mit der Entriegelung des Fahrrads.

## Revendications

1. Vélo équipé d'un système de verrouillage intelligent (10) pour l'identification et l'autorisation d'un utilisateur, ledit système de verrouillage intelligent (10) comprenant
- un lecteur d'empreintes digitales (21) pour enregistrer l'empreinte digitale d'un utilisateur,
- un système de reconnaissance (31) pour reconnaître les données d'échantillon d'empreinte digitale,
- un corps de serrure (22) pour verrouiller le vélo,
- un moteur (23) pour libérer mécaniquement le corps de serrure (22),
- un module de commande (32) pour commander le corps de verrouillage,
- un système d'identification (11) pour identifier un utilisateur à partir des données d'échantillon d'empreintes digitales,
- un module de communication (33) pour échanger des données avec le système d'identification (11),
- une source d'alimentation (51) pour alimenter le système de verrouillage intelligent (10) en énergie électrique,
dans lequel système d'identification (11) est configuré pour envoyer un signal de déverrouillage au module de communication (33) une fois qu'une correspondance positive est trouvée et que l'utilisateur est identifié, dans lequel le signal de déverrouillage est transmis au module de commande (32) et le moteur (23) est déclenché par le signal de déverrouillage pour libérer mécaniquement le corps de serrure (22), et dans lequel le système de verrouillage intelligent (10) comprend une minuterie intégrée pour enregistrer la période d'utilisation d'un utilisateur, la minuterie étant démarrée simultanément au déverrouillage du vélo.

2. Vélo comportant un système de verrouillage intelligent (10) selon la revendication 1, **caractérisé en ce que**
les données d'échantillon d'empreintes digitales sont cryptées et stockées dans une base de données (12).

3. Vélo équipé d'un système de verrouillage intelligent (10) selon l'une des revendications précédentes,
comprenant en outre un système de positionnement (25), en particulier un système GPS, pour localiser le vélo.

4. Vélo équipé d'un système de verrouillage intelligent (10) selon l'une des revendications précédentes,
**caractérisé en ce que**
la source d'alimentation (51) comprend au moins un élément parmi une cellule solaire (52), une alimentation interne (53), une batterie (55) et une alimentation externe (54).

5. Vélo équipé d'un système de verrouillage intelligent selon l'une des revendications précédentes,
**caractérisé en ce que**
au moins deux sources d'alimentation (51) sont disposées dans un système d'alimentation électrique (50).

6. Vélo équipé d'un système de verrouillage intelligent selon la revendication 5, **caractérisé en ce que**
les sources d'alimentation (51) sont accessibles dans un ordre en cascade.

7. Vélo comportant un système de verrouillage intelligent selon l'une des revendications précédentes,
**caractérisé en ce que**
la source d'alimentation (51) est connectée pour fournir de l'énergie au moteur (23) et/ou au système d'identification (11) afin de stocker des données d'échantillons d'empreintes digitales et/ou de faire correspondre des données d'échantillons d'empreintes digitales et/ou d'enregistrer l'utilisation par un utilisateur.

8. Enregistrement des données utilisateur pour un système de verrouillage intelligent (10) destiné à l'identification et à l'autorisation d'un utilisateur d'un vélo selon l'une des revendications précédentes, comprenant les étapes suivantes:
- Effectuer un enregistrement des données utilisateur avec un dispositif mobile (41) ou un dispositif fixe (42),
- Récupération à partir du système de reconnaissance (31) des données d'échantillons d'empreintes digitales pour une comparaison avec les données utilisateur,
- Faire correspondre les données utilisateur avec les données d'échantillon d'empreinte digitale par le système d'identification (11), dans lequel
- les informations relatives aux caractéristiques des empreintes digitales sont extraites des données d'échantillon d'empreintes digitales par un algorithme d'extraction du système d'identification (11).

9. Déverrouillage d'un vélo selon l'une des revendications 1 à 7, comprenant les étapes suivantes :
- Enregistrement d'une empreinte digitale d'un utilisateur par le lecteur d'empreintes digitales (21),
- Reconnaissance des données d'échantillon d'empreintes digitales par le système de reconnaissance (31),
- Envoi d'un signal de déverrouillage par le système d'identification (11) au module de communication (33) une fois qu'une correspondance positive est trouvée et que l'utilisateur est identifié, le signal de déverrouillage étant transmis au module de commande (32) et le moteur (23) étant déclenché par le signal de déverrouillage pour libérer mécaniquement le corps de serrure (22),
- Démarrage du minuteur simultanément au déverrouillage du vélo.
